# EUROPÄISCHE PATENTANMELDUNG

(11) **EP 4 667 781 A1**
(43) Veröffentlichungstag der Anmeldung: **24.12.2025**
(21) Anmeldenummer: 25183537.7
(22) Anmeldetag: 18.06.2025
(51) Int. Cl.: F16H 57/027, F16H 57/029, F16H 57/031

(54) **GETRIEBEGEHÄUSE MIT MEHREREN GEHÄUSEBAUTEILEN**

(30) Priorität: 19.06.2024 DE 102024205647
(71) Anmelder: Robert Bosch GmbH, 70442 Stuttgart (DE)
(72) Erfinder: Meyer, Christian, 76228 Karlsruhe-Wolfartsweier (DE)

(57) **Zusammenfassung**

Ein Getriebegehäuse weist mehrere Gehäusebauteile und einen Getrieberaum zur Aufnahme eines Getriebes sowie eine Entlüftungseinrichtung auf, die mit dem Getrieberaum strömungsverbunden ist. Ein Strömungsweg zwischen dem Getrieberaum und der Entlüftungseinrichtung bildet eine Labyrinthdichtung, die mindestens eine Strömungsumlenkung mit zwei winklig zueinander stehenden Strömungswegabschnitten umfasst.

## Beschreibung

Die Erfindung bezieht sich auf ein Getriebegehäuse, das sich aus mehreren Gehäusebauteilen zusammensetzt und einen Getrieberaum zur Aufnahme eines Getriebes aufweist. Das Getriebegehäuse ist außerdem mit einer Entlüftungseinrichtung versehen, die mit dem Getrieberaum strömungsverbunden ist.

### Stand der Technik

Bekannt sind Getriebegehäuse, die zur Aufnahme eines Getriebes eingerichtet sind und sich aus zwei miteinander verschraubten Gehäuseschalen zusammensetzen. Das Getriebe befindet sich in einem Getrieberaum, welcher von den Gehäuseschalen umschlossen ist. Zur Entlüftung des Getrieberaums ist dieser an eine Entlüftungseinrichtung angeschlossen, bestehend beispielsweise aus einem Entlüftungsschlauch an einer Öffnung im Getriebegehäuse und einem am Schlauchende befindlichen Entlüftungsventil.

### Offenbarung der Erfindung

Das erfindungsgemäße Getriebegehäuse weist mehrere Gehäusebauteile und einen von den Gehäusebauteilen umschlossenen, innen liegenden Getrieberaum zur Aufnahme eines Getriebes auf. Die Gehäusebauteile können als Gehäuseschalen ausgeführt sein, welche die Außenseite des Getriebegehäuses bilden und den Getrieberaum umschließen. Die Gehäuseschalen sind beispielsweise als Gehäusehalbschalen ausgeführt, welche bei der Montage zusammengefügt und beispielsweise miteinander verschraubt werden. Der Getrieberaum im Getriebegehäuse ist vorzugsweise strömungsdicht abgeschlossen, kann jedoch über eine Entlüftungseinrichtung entlüftet werden.

Die Entlüftungseinrichtung ist unmittelbar in einem Gehäusebauteil angeordnet. Hierbei handelt es sich insbesondere um ein Entlüftungsventil, das unter Verzicht auf eine Leitung direkt an der Außenseite eines Gehäusebauteils angeordnet ist. Der Strömungsweg zwischen dem Getrieberaum und der Entlüftungseinrichtung ist als eine Labyrinthdichtung ausgebildet, die mindestens eine Strömungsumlenkung mit zwei winklig zueinander stehenden Strömungswegabschnitten umfasst. Die Labyrinthdichtung ermöglicht im Rahmen der Entlüftung das Entweichen von Gas, insbesondere Luft, und verhindert zugleich ein Ausbreiten von Getriebeöl, das aufgrund der Strömungsumlenkung an einem den Strömungsweg begrenzenden Bauteil abtropfen kann.

Somit ermöglicht das erfindungsgemäße Getriebegehäuse eine wirksame Entlüftung des innen liegenden Getrieberaums in einer kompakten und leicht zu mutierenden Bauweise. Auf die Verlegung von Leitungen oder Schläuchen außerhalb des Getriebegehäuses als Teil der Entlüftungseinrichtung kann verzichtet werden, wodurch sowohl eine Einsparung an Bauteilen als auch an Montageschritten erreicht wird. Zugleich ist eine wirksame Entlüftung bei Vermeidung eines Ölaustritts gewährleistet.

Die Entlüftungseinrichtung kann an beliebigen Positionen im Getriebegehäuse angeordnet sein. Dementsprechend gibt es eine Vielzahl von Gestaltungsmöglichkeiten für das erfindungsgemäße Getriebegehäuse.

Die Entlüftungseinrichtung ist insbesondere vollständig in das Getriebegehäuse integriert. Die Entlüftungseinrichtung ragt nicht über die Außenkontur des Getriebegehäuses hinaus.

Das Getriebegehäuse kann zusätzlich zu dem Getrieberaum auch einen Elektronikraum mit einer Ansteuerungselektronik zur Ansteuerung des Getriebes und/oder eines Antriebsmotors enthalten, wobei der Elektronikraum üblicherweise oberhalb des Getrieberaums angeordnet ist und mit dem Getrieberaum strömungsverbunden ist. Auf diese Weise wird über die Entlüftungseinrichtung zusätzlich zu dem Getrieberaum auch der Elektronikraum entlüftet.

Des Weiteren kann es zweckmäßig sein, dass das Getriebegehäuse auch einen Motorraum zur Aufnahme eines Antriebsmotors aufweist. Auch der Motorraum kann mit dem Getrieberaum strömungsverbunden sein und mit dem Getrieberaum gemeinsam entlüftet werden.

Vorteilhafterweise grenzt das Gehäusebauteil, an dem die Entlüftungseinrichtung, insbesondere das Entlüftungsventil unmittelbar angeordnet ist, an den Getrieberaum an. Dies ist insbesondere für den Fall von Vorteil, dass dieses Gehäusebauteil zugleich an der Außenseite des Getriebegehäuses liegt, wobei in jedem Fall die Entlüftungseinrichtung in eine Ausnehmung in dem Gehäusebauteil eingesetzt ist.

Gemäß einer weiteren vorteilhaften Ausführung umfasst die Labyrinthdichtung einen Strömungsleitstutzen in einem ersten Gehäusebauteil und eine Stutzenaufnahme in einem zweiten Gehäusebauteil, wobei die Stutzenaufnahme mit Übermaß im Vergleich zu hineinragenden Strömungsleitstutzen ausgebildet ist. Dementsprechend weist der Strömungsleitstutzen einen kleineren Außendurchmesser im Vergleich zum Innendurchmesser der Stutzenaufnahme auf. Es kann vorteilhaft sein, dass Stutzenaufnahme und Strömungsleitstutzen konzentrisch zueinander angeordnet sind, so dass zwischen der Mantelfläche des Strömungsleitstutzens und der Innenseite der Stutzenaufnahme ein freier Ringraum gebildet ist, durch den Gase entweichen können. In die Stutzenaufnahme bzw. das Gehäusebauteil, welches die Stutzenaufnahme enthält, ist eine seitliche Strömungsöffnung eingebracht, über die das Gas aus dem Strömungsleitstutzen seitlich abströmen kann. Die Strömungsöffnung bildet die Mündungsöffnung eines Kanalabschnitts in dem Gehäusebauteil, wobei die Entlüftungseinrichtung in den Kanalabschnitt eingesetzt ist. Der Kanalabschnitt ist vorteilhafterweise vertikal verlaufend in dem Gehäusebauteil angeordnet, so dass die Schwerkraft der Abströmung von Flüssigkeitströpfchen durch den Kanalabschnitt entgegenwirkt.

Gemäß noch einer weiteren vorteilhaften Ausführung sind zwei Strömungsumlenkungen in der Labyrinthdichtung vorgesehen, die jeweils zwei winklig zueinander stehende Strömungswegabschnitte umfassen. Insgesamt kann der Strömungsweg beispielsweise drei Strömungswegabschnitte umfassen, die eine U-Form bilden. Vorteilhafterweise ist der mittlere Strömungswegabschnitt im Zwischenraum zwischen Stutzenaufnahme und Strömungsleitstutzen gebildet. Der erste Strömungswegabschnitt verzweigt vom Getrieberaum und ragt in den mittleren Strömungswegabschnitt hinein, wohingegen der dritte Strömungswegabschnitt von dem mittleren Strömungswegabschnitt verzweigt und insbesondere von dem Kanalabschnitt gebildet ist, in den die Entlüftungseinrichtung hineinragt. Der erste, vom Getrieberaum verzweigende Strömungswegabschnitt befindet sich insbesondere an einer an den Strömungsleitstutzen angrenzenden Ringschulter, die sich bis in den Getrieberaum hinein erstreckt. Die erste Strömungsumlenkung erfolgt dementsprechend von der Ringschulter in den Zwischenraum zwischen Strömungsleitstutzen und Stutzenaufnahme. Die zweite Strömungsumlenkung erfolgt von dem Zwischenraum zwischen Strömungsleitstutzen und Stutzenaufnahme und dem Kanalabschnitt zur Aufnahme der Entlüftungseinrichtung.

Es kann vorteilhaft sein, dass die Labyrinthdichtung von insbesamt drei Gehäusebauteilen des Getriebegehäuses gebildet und der Strömungsweg durch die Labyrinthdichtung durch die drei Gehäusebauteile begrenzt wird. Vorteilhafterweise begrenzen alle Gehäusebauteile auch den innen liegenden Getrieberaum.

Ein weiterer Aspekt der Erfindung bezieht sich auf eine Getriebegehäuse-Antriebsmotor-Kombination mit einem vorbeschriebenen Getriebegehäuse zur Aufnahme eines Getriebes. Das Getriebe kann mit dem Antriebsmotor kinematisch gekoppelt werden. Als Antriebsmotor kommt beispielsweise ein Elektromotor in Betracht, wobei alternativ auch eine Brennkraftmaschine als Antriebsmotor oder eine Kombination von Elektromotor und Brennkraftmaschine in Betracht kommt.

Weitere Vorteile und zweckmäßige Ausführungen sind den weiteren Ansprüchen, der Figurenbeschreibung und den Zeichnungen zu entnehmen. Es zeigen:

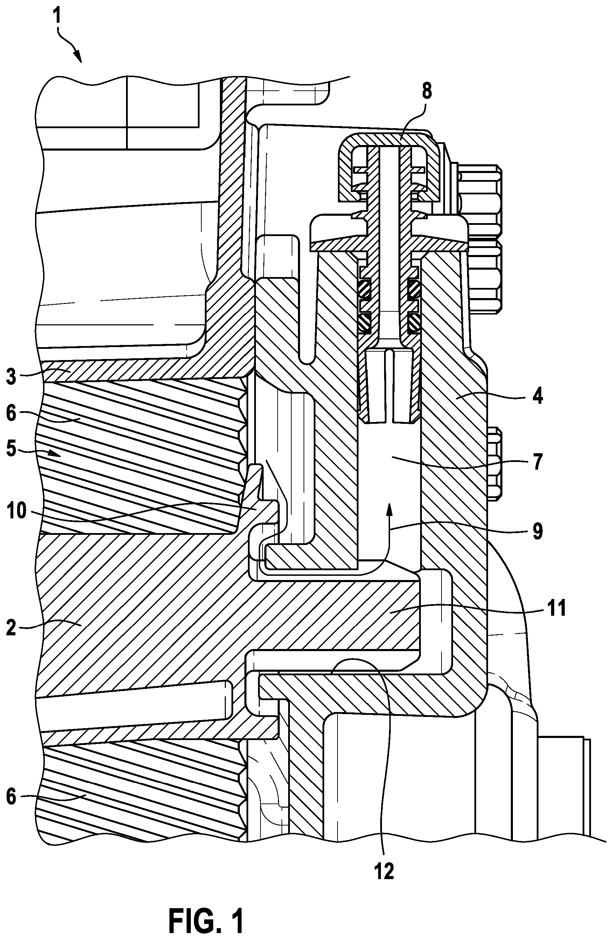

- Fig. 1: einen Schnitt durch ein Getriebegehäuse mit einem innen liegenden Getrieberaum und mit einem Entlüftungsventil zur Entlüftung des Getrieberaums, wobei im Strömungsweg zwischen dem Getrieberaum und dem Entlüftungsventil eine Labyrinthdichtung mit mehreren Strömungsumlenkungen angeordnet ist,

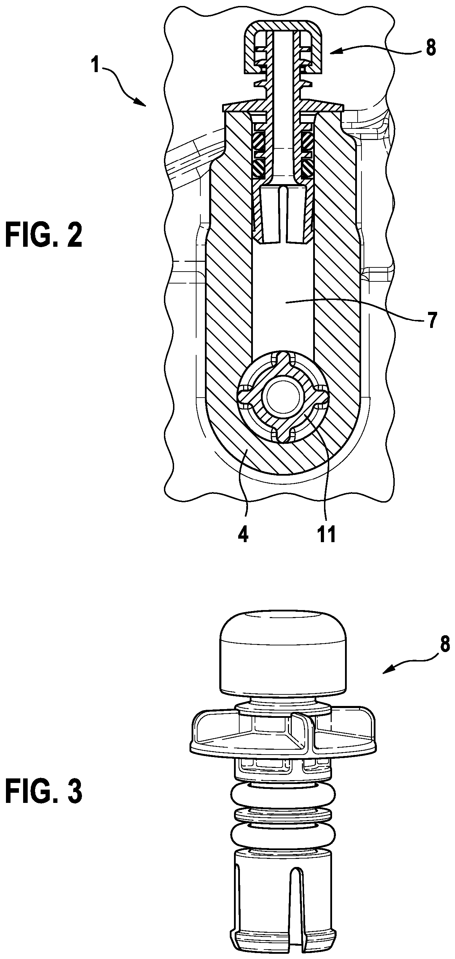

- Fig. 2: einen Schnitt durch das Getriebegehäuse in Höhe des Entlüftungsventils, dargestellt in einer um 90° gedrehten Ansicht,
- Fig. 3: in Einzeldarstellung eine perspektivische Ansicht des Entlüftungsventils.
In den Figuren sind gleiche Bauteile mit gleichen Bezugszeichen versehen.

Wie den Figuren zu entnehmen ist, ist ein Getriebegehäuse 1 aus mehreren Gehäusebauteilen 2, 3, 4 zusammengesetzt, welche jeweils einen Teil der Außenseite des Getriebegehäuses 1 bilden und einen innen liegenden Getrieberaum 5 zur Aufnahme eines Getriebes 6 umschließen. Das Getriebe 6 kann mit einem elektrischen Antriebsmotor oder gegebenenfalls einer Brennkraftmaschine als Antriebsmotor gekoppelt werden. In das Gehäusebauteil 4 ist ein Kanal 7 eingebracht, der vertikal verläuft und in dessen obenliegenden Abschnitt, welcher bis zur Außenseite reicht, eine Entlüftungseinrichtung in Form eines Entlüftungsventils 8 eingesetzt ist. Über das Entlüftungsventil 8 können Gase aus dem Getrieberaum 5 abgeleitet werden. Bei dem Entlüftungsventil 8 handelt es sich vorzugsweise um ein Standard-Entlüftungsventil.

Der Strömungsweg 9 zwischen dem Getrieberaum 5 und dem Kanal 7 mit dem Entlüftungsventil 8 weist mehrere Strömungsumlenkungen auf. Hierdurch bildet der Strömungsweg 9 eine Labyrinthdichtung. Der Strömungsweg 9 ist etwa U-förmig ausgeführt und wird von den Gehäusebauteilen 2, 3 und 4 begrenzt, zwischen denen ein den Strömungsweg 9 bildender Spalt liegt. Unmittelbar an den Getrieberaum 5 grenzt eine radial erweiterte Ringschulter 10 an, die einteilig mit dem Gehäusebauteil 2 ausgebildet ist, wobei sich an die Ringschulter 10 axial ein Strömungsleitstutzen 11 anschließt, welcher ebenfalls Teil des Gehäusebauteils 2 ist. Der Strömungsleitstutzen 11 ragt in eine Stutzenaufnahme 12 hinein, welche sich in dem Gehäusebauteil 4 befindet. Die Dimensionen von Strömungsleitstutzen 11 und Stutzenaufnahme 12 sind in der Weise ausgeführt, dass die zylindrische Stutzenaufnahme 12 einen Innendurchmesser besitzt, der gegenüber dem Außendurchmesser des ebenfalls zylindrischen Strömungsleitstutzens 11 ein Übermaß aufweist. Der Strömungsleitstutzen 11 sitzt konzentrisch in der Stutzenaufnahme 12, so dass zwischen der Außenseite des Strömungsleitstutzens 11 und dem Innenmantel der Stutzenaufnahme 12 ein Ringraum gebildet ist, welcher den mittleren Strömungswegabschnitt des annähernd U-förmig ausgebildeten Strömungswegs 9 bildet.

Der erste Strömungswegabschnitt, welcher unmittelbar sich an den Getrieberaum 5 anschließt, verläuft entlang der Ringschulter 10 bis zum Erreichen der Außenseite des Strömungsleitstutzens 11. Der dritte Strömungswegabschnitt verläuft in dem Kanal 7, der von einer seitlichen Strömungsöffnung in der Stutzenaufnahme 12 verzweigt und dessen äußerer Kanalabschnitt das Entlüftungsventil 8 aufnimmt. Somit erfährt der Strömungsweg 9 zwischen dem Getrieberaum 5 und dem Kanal 7 zwei Umlenkungen von jeweils etwa 90°. Der Ringraum zwischen der Mantelfläche des Strömungsleitstutzens 11 und der Innenseite der Stutzenaufnahme 12 ist außerdem als schmaler Ringspalt ausgebildet, welcher ausreichend groß ist, damit Gase entweichen können, jedoch hinreichend schmal ist, so dass Öltröpfchen sich an der Mantelfläche des Strömungsleitstutzens 11 oder der Wandseite der Stutzenaufnahme 12 anlagern. Gemeinsam mit der mehrfachen Strömungsumlenkung wird auf diese Weise die gewünschte Labyrinthdichtung gebildet, über die Gase, nicht jedoch Öltröpfchen entweichen können.

## Patentansprüche

1. Getriebegehäuse, mit mehreren Gehäusebauteilen (2, 3, 4) und einem Getrieberaum (5) zur Aufnahme eines Getriebes (6) und mit einer Entlüftungseinrichtung (8), die mit dem Getrieberaum (5) strömungsverbunden ist, **dadurch gekennzeichnet, dass** die Entlüftungseinrichtung (8) unmittelbar an einem Gehäusebauteil (4) angeordnet und ein Strömungsweg (9) zwischen dem Getrieberaum (5) und der Entlüftungseinrichtung (8) eine Labyrinthdichtung bildet, die mindestens eine Strömungsumlenkung mit zwei winklig zueinander stehenden Strömungswegabschnitten umfasst.

2. Getriebegehäuse nach Anspruch 1, **dadurch gekennzeichnet, dass** das Gehäusebauteil (4), an dem die Entlüftungseinrichtung (8) unmittelbar angeordnet ist, an den Getrieberaum (5) angrenzt.

3. Getriebegehäuse nach Anspruch 1 oder 2, **dadurch gekennzeichnet, dass** die Labyrinthdichtung einen Strömungsleitstutzen (11) in oder an einem ersten Gehäusebauteil (2) und eine Stutzenaufnahme (12) in einem zweiten Gehäusebauteil (4) umfasst, wobei die Stutzenaufnahme (12) ein Übermaß im Vergleich zum hineinragenden Strömungsleitstutzen (11) aufweist.

4. Getriebegehäuse nach Anspruch 3, **dadurch gekennzeichnet, dass** in die Stutzenaufnahme (12) eine seitliche Strömungsöffnung eingebracht ist, die Teil eines Kanalabschnitts (7) in dem Gehäusebauteil (4) ist, in den die Entlüftungseinrichtung (8) hineinragt.

5. Getriebegehäuse nach Anspruch 3 oder 4, **dadurch gekennzeichnet, dass** der Kanalabschnitt (7) vertikal verlaufend angeordnet ist.

6. Getriebegehäuse nach einem der Ansprüche 1 bis 5, **dadurch gekennzeichnet, dass** die Labyrinthdichtung zwei Strömungsumlenkungen mit jeweils winklig zueinander stehenden Strömungswegabschnitten umfasst.

7. Getriebegehäuse nach Anspruch 6, **dadurch gekennzeichnet, dass** die beiden Strömungsumlenkungen insgesamt einen U-förmigen Strömungsweg (9) bilden.

8. Getriebegehäuse nach Anspruch 6 oder 7, **dadurch gekennzeichnet, dass** die beiden Strömungsumlenkungen vom gleichen Gehäusebauteil (2) begrenzt sind.

9. Getriebegehäuse nach Anspruch 3 und 8, **dadurch gekennzeichnet, dass** die beiden Strömungsumlenkungen vom Gehäusebauteil (2) mit dem Strömungsleitstutzen (11) begrenzt sind, wobei die erste Strömungsumlenkung an einer an den Strömungsleitstutzen (11) angrenzenden Ringschulter (10) und die zweite Strömungsumlenkung zwischen dem Strömungsleitstutzen (11) und dem Kanalabschnitt an der seitlichen Strömungsöffnung der Stutzenaufnahme (12) liegt.

10. Getriebegehäuse-Antriebsmotor-Kombination mit einem Getriebegehäuse (1) nach einem der Ansprüche 1 bis 9.

11. Getriebegehäuse-Ansteuerungselektronik-Kombination mit einem Getriebegehäuse (1) nach einem der Ansprüche 1 bis 9.
